# EUROPEAN PATENT APPLICATION

(11) **EP 4 726 601 A1**
(43) Date of publication of application: **15.04.2026**
(21) Application number: 25197963.9
(22) Date of filing: 25.08.2025
(51) Int. Cl.: G06K 7/10

(54) **RADIO FREQUENCY IDENTIFICATION (RFID) READER AND A METHOD FOR SWITCHING ANTENNA POLARIZATION OF RFID READER**

(30) Priority: 26.09.2024 IN 202411072804
(71) Applicant: Hand Held Products, Inc., Charlotte, NC 28202 (US)
(72) Inventor: GODAWARTHY, Kailash Kashyap, Charlotte, 28202 (US); PANDEY, Pankaj Kumar, Charlotte, 28202 (US)
(74) Representative: Haseltine Lake Kempner LLP

(57) **Abstract**

A radio frequency identification (RFID) reader (100) is disclosed. The RFID reader comprising at least one antenna (102) configured to emit a plurality of radio frequency (RF) signals to at least one RFID tag (112). The RFID reader further comprising at least one processor (104) and at least one non-transitory memory (106) comprising a computer program code, the at least one non-transitory memory and the computer program code configured to, with the at least one processor, cause the RFID reader to determine a plurality of parameters associated with the RFID reader based on the plurality of RF signals emitted; determine an effective isotropic radiated power (EIRP) of the RFID reader based on the plurality of parameters; compare the EIRP with a threshold value; and switch a polarization of the at least one antenna from a first polarization to a second polarization based on the comparison.

## Description

### TECHNOLOGICAL FIELD

Example embodiments of the present disclosure relate generally to a radio frequency identification (RFID) reader, and more particularly to the RFID reader and a method for switching antenna polarization of the RFID reader.

### BACKGROUND

Radio frequency identification (RFID) devices are used in various fields of applications such as warehouse, manufacturing plants, logistics, healthcare, etc. In some instances, RFID devices may also be known as RFID readers. The RFID readers have a capability to read the RFID tags wirelessly and at varying distances. However, some of the RFID readers have limitations regarding a distance range up to which they can read the RFID tags.

The inventors identified numerous deficiencies and problems in in existing technologies and processes, which are the subjects of embodiments described herein. Through applied effort, ingenuity, and innovation, many of these deficiencies and problems have been solved by developing solutions that are included in embodiments of the present disclosure, many examples of which are described in detail herein.

### BRIEF SUMMARY

The following presents a summary of some example embodiments to provide a basic understanding of some aspects of the present disclosure. This summary is not an extensive overview and is intended to neither identify key or critical elements nor delineate the scope of such elements. It will also be appreciated that the scope of the disclosure encompasses many potential embodiments in addition to those here summarized, some of which will be further described in the detailed description that is presented later.

In an example embodiment, a radio frequency identification (RFID) reader is disclosed. The RFID reader comprises at least one antenna configured to emit a plurality of radio frequency (RF) signals to at least one RFID tag. Further, the RFID reader comprises at least one processor and at least one non-transitory memory comprising a computer program code, the at least one non-transitory memory and the computer program code configured to, with the at least one processor, cause the RFID reader to determine a plurality of parameters associated with the RFID reader based on the plurality of RF signals emitted; determine an effective isotropic radiated power (EIRP) of the RFID reader based on the plurality of parameters; compare the EIRP with a threshold value; and switch a polarization of the at least one antenna from a first polarization to a second polarization based on the comparison.

In some embodiments, the plurality of parameters are parameters associated with the RFID reader and comprise at least one of a transmit power, an antenna gain, a switch loss, and a RF cable loss.

In some embodiments, the first polarization corresponds to a linear polarization and the second polarization corresponds to a circular polarization. In some embodiments, to switch the polarization from the linear polarization to the circular polarization occurs when the EIRP is above the threshold value. In some embodiments, to switch the polarization from the circular polarization to the linear polarization occurs when the EIRP is below the threshold value. In some embodiments, the linear polarization further comprises at least a linear polarization-vertical (LP-V) and a linear polarization-horizontal (LP-H).

In some embodiments, the at least one non-transitory memory and the computer program code are further configured to, with the at least one processor, cause the RFID reader to determine a received signal strength indicator (RSSI) value associated with signals received from the at least one RFID tag, in the LP-V and the LP-H.

In some embodiments, the at least one non-transitory memory and the computer program code are further configured to, with the at least one processor, cause the RFID reader to compare the RSSI value in the LP-V with the RSSI value in the LP-H.

In some embodiments, the at least one non-transitory memory and the computer program code are further configured to, with the at least one processor, cause the RFID reader to set the polarization of the at least one antenna to the LP-V or the LP-H based at least on the comparison.

In some embodiments, the threshold value is a maximum frequency limit of the EIRP for the RFID reader.

In some embodiments, a method is disclosed. The method comprises emitting, via at least one antenna of a radio frequency identification (RFID) reader, a plurality of radio frequency (RF) signals to at least one RFID tag; determining, via the RFID reader having at least one processor and at least one non-transitory memory comprising a computer program code, a plurality of parameters associated with the RFID reader based on the plurality of RF signals emitted; determining, via the RFID reader, an effective isotropic radiated power (EIRP) of the RFID reader based on the plurality of parameters; comparing, via the RFID reader, the EIRP with a threshold value; and switching, via the RFID reader, polarization of the at least one antenna from a first polarization to a second polarization based on the comparison.

The above summary is provided merely for purposes of summarizing some exemplary embodiments to provide a basic understanding of some aspects of the disclosure. Accordingly, it will be appreciated that the above-described embodiments are merely examples and should not be construed to narrow the scope or spirit of the disclosure in any way. It will be appreciated that the scope of the disclosure encompasses many potential embodiments in addition to those here summarized, some of which are further explained within the following detailed description and its accompanying drawings.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates a block diagram of a radio frequency identification (RFID) reader in accordance with an example embodiment of the present disclosure;
FIG. 2A illustrates a front view of at least one antenna of the RFID reader in accordance with an example embodiment of the present disclosure;
FIG. 2B illustrates a side view of the at least one antenna of the RFID reader in accordance with an example embodiment of the present disclosure;
FIG. 2C illustrates a perspective view of the at least one antenna of the RFID reader in accordance with an example embodiment of the present disclosure;
FIG. 3 illustrates a flowchart showing switching of polarization of at least one antenna by the RFID reader in accordance with an example embodiment of the present disclosure;
FIG. 4A illustrates a block diagram showing switching of the polarization of the at least one antenna by the RFID reader in accordance with an example embodiment of the present disclosure;
FIG. 4B illustrates a logic table showing various logic states associated with the RFID reader in accordance with an example embodiment of the present disclosure; and
FIG. 5 illustrates a flowchart showing a method for switching the polarization of the at least one antenna of the RFID reader in accordance with an example embodiment of the present disclosure.

### DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of a radio frequency identification (RFID) reader. Embodiments may be configured to emit a plurality of radio frequency (RF) signals to at least one RFID tag through the at least one antenna. Embodiments may be configured to determine a plurality of parameters associated with the RFID reader based on the plurality of RF signals emitted. Embodiments may be configured to determine an effective isotropic radiated power (EIRP) of the RFID reader based on the plurality of parameters determined. Embodiments may be configured to compare the EIRP with a threshold value. Embodiments may be configured to switch polarization of the at least one antenna from a first polarization to a second polarization or from the second polarization to the first polarization based on the comparison.

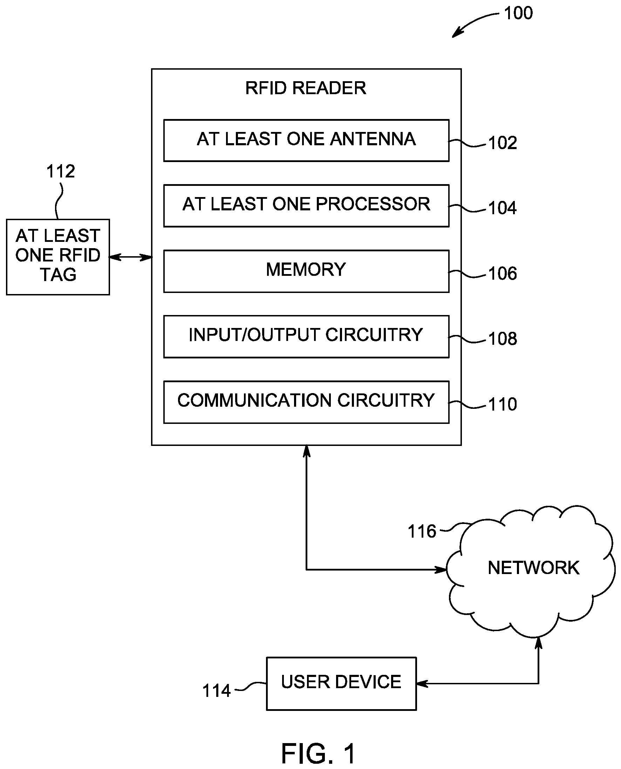

FIG. 1 illustrates a block diagram of a radio frequency identification (RFID) reader 100, in accordance with an example embodiment of the present disclosure.

In some embodiments, the RFID reader 100 may comprise at least one antenna 102, at least one processor 104, a memory 106, an input/output circuitry 108, and a communication circuitry 110. In some embodiments, the RFID reader 100 may be installed within a facility. Further, the facility may comprise at least one of a warehouse, logistics facility, healthcare facility, etc. In some embodiments, the RFID reader 100 may be configured to read at least one RFID tag 112 present in proximity to the RFID reader 100. In some embodiments, the RFID reader 100 may be electrically connected with a power source (not shown). In some embodiments, the power source may be configured to provide an electric power supply to the RFID reader 100. In some embodiments, the at least one antenna 102 of the RFID reader 100 may be configured to emit a plurality of radio frequency (RF) signals towards the at least one RFID tag 112.

In some embodiments, the RFID reader 100 may be configured to generate the plurality of RF signals. In some embodiments, the plurality of RF signals generated may have a frequency range from 3 kHz to 300 GHz. In some embodiments, the RFID reader 100 be configured to generate the plurality of RF signals at a regular time interval. In some embodiments, the plurality of RF signals generated may depend upon a type of the RFID reader 100. In some embodiments, the type of the RFID reader 100 may comprise at least one of a low frequency (LF) RFID reader, a high frequency (HF) RFID reader, and an ultra-high frequency (UHF) RFID reader. In one example, when the RFID reader 100 corresponds to an UHF RFID reader that generates the plurality of RF signals within an ultra-high radio frequency range. In another example, when the RFID reader 100 corresponds to a LF RFID reader, the RFID reader 100 generates the plurality of RF signals within a low radio frequency range.

In some embodiments, the RFID reader 100 may comprise the at least one antenna 102. In some embodiments, the at least one antenna 102 may be configured to emit the plurality of RF signals in a field of view (FOV). In some embodiments, the at least one antenna 102 may be operationally coupled with the RFID reader 100. In some embodiments, the at least one antenna 102 may be configured to emit the plurality of RF signals towards at least one RFID tag 112. In some embodiments, the at least one RFID tag 112 may be present within the FOV of the at least one antenna 102 of the RFID reader 100. In one example, the plurality RF signals are configured to travel through various mediums and interact with the at least one RFID tag 112. In some embodiments, the at least one RFID tag 112 may further comprise another antenna. Further, the another antenna of the at least one RFID tag 112 may be configured to receive the plurality of RF signals emitted by the at least one antenna 102 of the RFID reader 100. In some embodiments, the plurality of RF signals may carry an electromagnetic energy that may power the at least one RFID tag 112. Further, upon receiving the energy, the at least one RFID tag 112 may be configured to transmit back information stored within the at least one RFID tag 112 in a form of modulated return signals towards the at least one antenna 102 of the RFID reader 100.

In some embodiments, the at least one antenna 102 of the RFID reader 100 may be configured to receive the modulated return signals. Further, the RFID reader 100 may be configured to process the modulated return signals. In some embodiments, the RFID reader 100 may be configured to decode the modulated return signals to extract the information stored in the at least one RFID tag 112. In one example, the at least one antenna 102 may be directly coupled to the RFID reader 100. In another example, the at least antenna 102 may be arranged in a daisy-chained configuration (i.e., a serial connection of similar antennas as the at least one antenna 102. In some embodiments, the at least one antenna 102 may correspond to at least one of a linear polarized antenna, circular polarized antenna, near-field antenna, far-field antenna, patch antenna, etc. In some embodiments, the linear polarized antenna may be configured to emit the plurality of RF signals in a single plane (e.g., a horizontal plane or a vertical plane). For example, the linear polarized antenna may be used in conveyor systems where RFID tags have a consistent orientation. In some embodiments, the circular polarized antenna may be configured to emit the plurality of RF signals in a rotating circular pattern for better interaction with the at least one RFID tag 112. For example, the circular polarized antennas are used in warehouse applications where the RFID tags attached to items may have different orientations.

In some embodiments, the near-field antenna may be designed to interact with the at least one RFID tag 112 from a very close range. For example, the near-field antennas are used in applications requiring a precise reading of the RFID tags from a very close range, such as payment systems, access controls, or tracking small items on production lines. In some embodiments, the far-field antenna may be configured to emit the plurality of RF signals that may reach and interact with the at least one RFID tag 112 from a greater distance. For example, the far-field antennas are used in applications where the RFID tags needs to be read from a distance, such as logistics, asset tracking, and inventory management. In some embodiments, the patch antenna may be constructed with a flat structure that are easy to be integrated into surfaces or devices. For example, the patch antennas are used in compact or mobile RFID reader designs such as handheld readers or embedded systems.

In some embodiments, the RFID reader 100 may comprise the at least one processor 104 and at least one non-transitory memory comprising a computer program code (i.e., the memory 106). In some embodiments, the at least one processor 104 may include suitable logic, circuitry, and/or interfaces that are operable to execute one or more instructions stored in the memory 106 to perform predetermined operations. In one embodiment, the at least one processor 104 may be configured to decode the one or more instructions and cause the RFID reader 100 to execute the one or more instructions that are stored within the memory 106. The at least one processor 104 may cause the RFID reader 100 to execute one or more computer-readable program instructions, such as program instructions to carry out any of the functions described in this description. Further, the at least one processor 104 may be implemented using one or more processor technologies known in the art such as central processing unit (CPU), field-programmable gate array (FPGA), digital signal processors (DSP), etc. Examples of the at least one processor 104 may comprise at least one of, one or more general purpose processors and/or one or more special purpose processors that may be designed to handle the RFID reader 100.

In some embodiments, the memory 106 and the computer program code, with at least one processor 104 may cause the RFID reader 100 to determine a plurality of parameters associated with the RFID reader 100 based on the plurality of RFID signals emitted. In some embodiments, the plurality of parameters may comprise at least one of transmit power, antenna gain, switch loss, and RF cable loss associated with the RFID reader 100. In some embodiments, the transmit power of the RFID reader 100 may refer to an amount of power the at least one antenna 102 uses to emit the plurality of RF signals. Further, the transmit power may be directly proportional to range of the RFID reader 100 to read the at least one RFID tag 112. For example, when the transmit power of the RFID reader 100 is 10 dBm, then the distance at which the RFID reader 100 may read the at least one RFID tag 112 is 5 meters. Further, when the transmit power of the RFID reader 100 is 20 dBm, then the distance at which the RFID reader 100 may read the at least one RFID tag 112 is 10 meters.

In some embodiments, the antenna gain may be configured to represent ability of the at least one antenna 102 of the RFID reader 100 to convert an input power into the plurality of RF signals in a specific direction. In some embodiments, the switch loss of the RFID reader 100 may refer to a loss of signal strength when the plurality of RF signals passes through switches within the RFID reader 100. Further, the switches may be configured to route the plurality of RF signals between different components of the RFID reader 100 or the at least one antenna 102. In some embodiments, the RF cable loss may be configured to refer reduction in signal strength as the plurality of RF signals travel through cables that may connect the RFID reader 100 to the at least one antenna 102.

In some embodiments, the RFID reader 100 may further be configured to determine an effective isotropic radiated power (EIRP) of the RFID reader 100 based on the plurality of parameters. In some embodiments, the EIRP may correspond to a measure of a power radiated from the at least one antenna 102 of the RFID reader 100 in a direction of its strongest emission. In some embodiments, the EIRP of the RFID reader 100 may be determined using the plurality of parameters (i.e., the transmit power (Pt), the antenna gain (Ga), and a sum of the switch loss and cable loss (Lc)). In some embodiments, the EIRP of the RFID reader 100 may be determined using following equation: *EIRP = Pt + Ga - Lc.* In some embodiments, the RFID reader 100 may be configured to compare the EIRP with a threshold value. In some embodiments, the threshold value may correspond to a maximum frequency limit of the EIRP for the RFID reader 100. Further, the maximum frequency limit of the EIRP for the RFID reader 100 is 36 dBm.

In some embodiments, the RFID reader 100 may be configured to switch polarization of the at least one antenna 102 from a first polarization to a second polarization based on the comparison. In some embodiments, the first polarization may correspond to a linear polarization and the second polarization may correspond to a circular polarization. In one instance, the at least one processor 104 may be configured to switch the polarization of the at least one antenna 102 of the RFID reader 100 from the linear polarization to the circular polarization when the EIRP is above the threshold value. In another instance, the at least one processor 104 may be configured to switch the polarization of the at least one antenna 102 of the RFID reader 100 from the circular polarization to the linear polarization when the EIRP determined is below the threshold value.

In some embodiments, the linear polarization may further comprise at least one of a linear polarization-vertical (LP-V) and a linear polarization-horizontal (LP-H). In some embodiments, the RFID reader 100 may be configured to determine a received signal strength indicator (RSSI) value associated with signals received from the at least one RFID tag 112, in the LP-V and the LP-H. In some embodiments, the RSSI value may correspond to a strength of the modulated return signals received by the at least one antenna 102 of the RFID reader 100. In some embodiments, the RFID reader 100 may be configured to compare the RSSI value in the LP-V with the RSSI value in the LP-H. In some embodiments, the RFID reader 100 may be configured to set the polarization of the at least one antenna 102 to the LP-V or the LP-H based on the comparison.

In some embodiments, the memory 106 may be configured to store the computer code and the one or more datasets associated with the data received by the at least one processor 104 from the RFID reader 100. It is apparent to a person with ordinary skill in the art that the one or more instructions stored in the memory 106 enable the hardware of the RFID reader 100 to perform the predetermined operations. Some of the commonly known memory implementations include, but are not limited to, fixed (hard) drives, magnetic tape, floppy diskettes, optical disks, Compact Disc Read-Only Memories (CD-ROMs), and magneto-optical disks, semiconductor memories, such as ROMs, Random Access Memories (RAMs), Programmable Read-Only Memories (PROMs), Erasable PROMs (EPROMs), Electrically Erasable PROMs (EEPROMs), flash memory, magnetic or optical cards, or other type of media/machine-readable medium suitable for storing electronic instructions.

In some embodiments, the RFID reader 100 may further comprise the input/output circuitry 108. The input/output circuitry 108 may enable the user to communicate or interface with the RFID reader 100, via a user device 114. The user device 114 may include N number of user devices. In some embodiments, the input/output circuitry 108 may act as a medium to transmit input from the RFID reader 100 to and from the at least one processor 104. In some embodiments, the input/output circuitry 108 may refer to the hardware and software components that facilitate the exchange of information between the user device 114 and the RFID reader 100. In one example, the user device 114 may facilitate monitoring of the data of the RFID reader 100 and/or the at least one antenna 102 of the RFID reader 100. The input/output circuitry 108 may include various input devices such as keyboard, scanner and various output devices such as a display unit, printers that may facilitate a user to monitor the operations of the RFID reader 100.

In some embodiments, the RFID reader 100 may further comprise the communication circuitry 110. The communication circuitry 110 may allow the RFID reader 100 to exchange data or information with other systems or apparatuses. Further, the communication circuitry 110 may include network interfaces, protocols, and software modules responsible for sending and receiving data or information from the user device 114 through a network 116. In some embodiments, the communication circuitry 110 may include Ethernet ports, Wi-Fi adapters, or communication protocols like HTTP or MQTT for connecting with other systems. The communication circuitry 110 may further include components such as communication modules (e.g., Wi-Fi, Ethernet, cellular), transceivers, antennas, and protocols (e.g., TCP/IP, MQTT, SNMP) for exchanging data with the user device and the other systems.

It will be apparent to one skilled in the art the above-mentioned components of the RFID reader 100 have been provided only for illustration purposes, without departing from the scope of the disclosure.

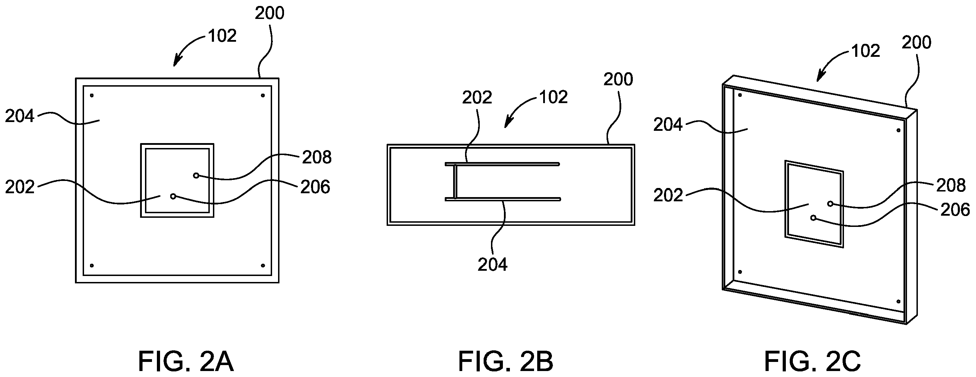

FIG. 2A illustrates a front view of the at least one antenna 102 of the RFID reader 100, in accordance with an example embodiment of the present disclosure. FIG. 2B illustrates a side view of the at least one antenna 102 of the RFID reader 100, in accordance with an example embodiment of the present disclosure. FIG. 2C illustrates a perspective view of the at least one antenna 102 of the RFID reader 100, in accordance with an example embodiment of the present disclosure.

In some embodiments, the RFID reader 100 may be configured to read the at least one RFID tag 112 present in the FOV of the RFID reader 100. In some embodiments, the RFID reader 100 may comprise the at least one antenna 102. Further, the at least one antenna 102 may be configured to emit the plurality of RF signals to the at least one RFID tag 112 to read the at least one RFID tag 112. In some embodiments, the at least one antenna 102 of the RFID reader 100 may be encased inside a housing 200. Further, the housing 200 may be configured to accommodate the at least one antenna 102 and various components associated with the at least one antenna 102. In some embodiments, the housing 200 may be configured to provide a physical protection to the at least one antenna 102 of the RFID reader 100 from various environmental factors, mechanical damages, and tampering.

In some embodiments, the housing 200 may comprise at least five sides (e.g., front, rear, left, right, top, and bottom). In some embodiments, the front side of the housing 200 may be configured to allow the plurality of RF signals emitted by the at least one antenna 102 to pass through. In some embodiments, the front side of the housing 200 may be composed of materials such as plastics, polycarbonate etc. The material of the front side of the housing 200 may be selected such that the plurality of RF signals may easily pass-through. In some embodiments, the remaining sides of the housing 200 (i.e., rear, left, right, top, and bottom) may be composed of material that may correspond to metals, such as aluminum, stainless steel, etc. The material of the remaining sides may be selected to prevent physical damages to the at least one antenna 102 of the RFID reader 100.

In some embodiments, the housing 200 may define at least one inner cavity. In some embodiments, the at least one inner cavity may be configured to accommodate the at least one antenna 102 of the RFID reader 100. Further, the housing 200 may be configured to accommodate a first printed circuit board (PCB) 202 and a second printed circuit board (PCB) 204 (as illustrated in FIG. 2B). In some embodiments, the first PCB 202 and the second PCB 204 may be arranged in a vertical stacked orientation. Further, the first PCB 202 may be positioned on top of the second PCB 204. Further, the at least one antenna 102 may be fabricated over the first PCB 202. In some embodiments, the second PCB 204 may facilitate fabrication of various electronic components associated with the at least one antenna 102 of the RFID reader 100. In some embodiments, the at least one antenna 102 may comprise at least two feed points comprising a first feed point 206 and a second feed point 208. In some embodiments, the first feed point 206 may correspond to a horizontal feed point. In some embodiments, the second feed point 208 may comprise a vertical feed point. In some embodiments, the first feed point 206 of the at least one antenna 102 may facilitate the at least one antenna 102 to emit the plurality of RF signals with the horizontal polarization. In some embodiments, the second feed point 208 of the at least one antenna 102 may facilitate the at least one antenna 102 to emit the plurality of RF signals with the vertical polarization.

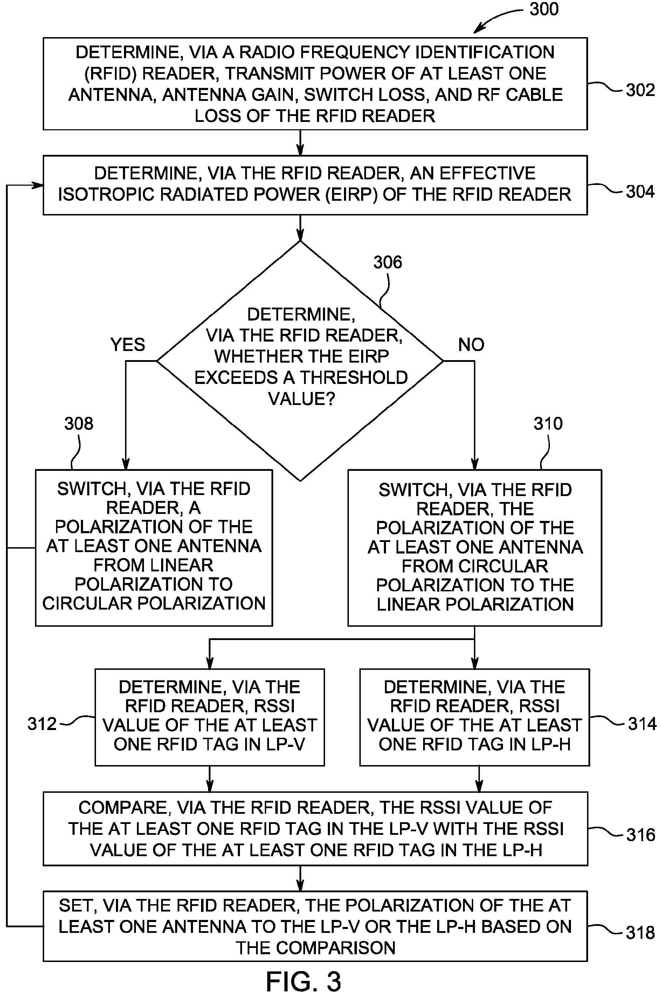

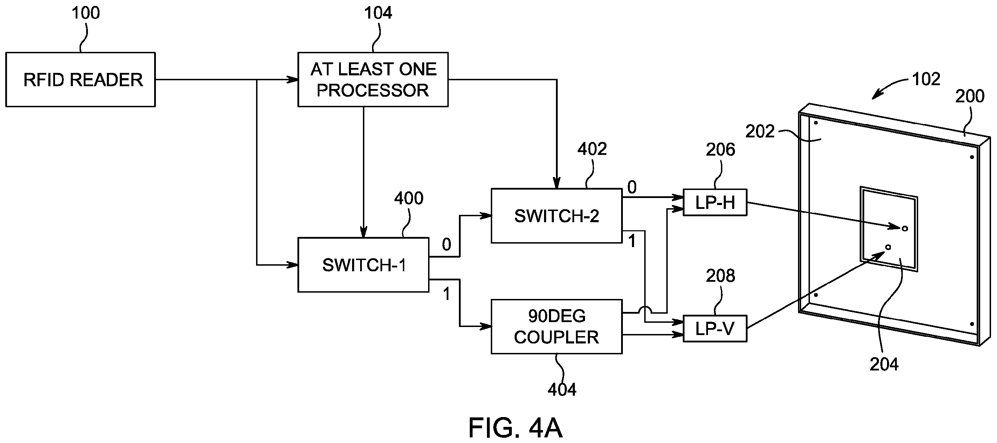

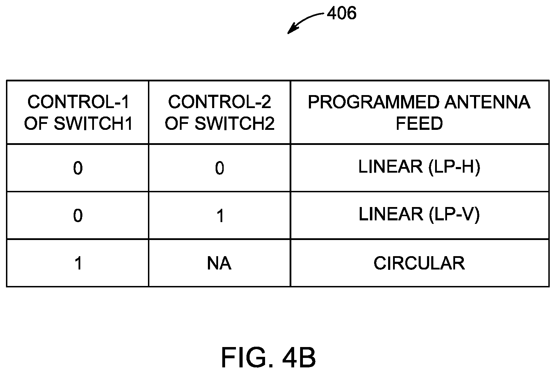

FIG. 3 illustrates a flowchart 300 showing switching of the polarization of the at least one antenna 102 by the RFID reader 100, in accordance with an example embodiment of the present disclosure. FIG. 4A illustrates a block diagram showing switching of the polarization of the at least one antenna 102 by the RFID reader 100, in accordance with an example embodiment of the present disclosure. FIG. 4B illustrates a logic table 406 showing various logic states associated with the RFID reader 100, in accordance with an example embodiment of the present disclosure.

At operation 302, the RFID reader 100 may be configured to determine the transmit power of the at least one antenna 102, the antenna gain, the switch loss, and the RF cable loss of the RFID reader 100. At operation 304, the RFID reader 100 may be configured to determine the EIRP of the RFID reader 100. Further, the EIRP of the RFID reader 100 may be calculated using following equation: *EIRP = Pt + Ga - Lc,* Where: Pt corresponds to transmit power, Ga corresponds to antenna gain, and Lc corresponds to a sum of antenna loss and the cable loss. At operation 306, the RFID reader 100 may be configured to determine whether the EIRP of the RFID reader 100 is above the threshold value. Further, the threshold value may correspond to the maximum frequency limit of the EIRP for the RFID reader 100. For example, the maximum frequency limit of the EIRP for the RFID reader 100 is 36 dBm.

At operation 308, the RFID reader 100 may be configured to switch the polarization of the at least one antenna 102 from the linear polarization to the circular polarization, when the EIRP determined is above the threshold value (i.e., >36 dBm). At operation 310, the RFID reader 100 may be configured to switch the polarization of the at least one antenna 102 from the circular polarization to the linear polarization (i.e., LP-V or LP-H), when the EIRP determined is below the threshold value (i.e., <36 dBm). At operation 312, the RFID reader 100 may be configured to determine the RSSI value of the at least one RFID tag 112 in the LP-V. At operation 314, the RFID reader 100 may be configured to measure the RSSI value of the at least one RFID tag 112 in the LP-H. At operation 316, the RFID reader 100 may be configured to compare the RSSI value of the at least one RFID tag 112 in the LP-V with the RSSI value of the at least one RFID tag 112 in the LP-H. Thereafter, at operation 318, the RFID reader 100 may be configured to set the polarization of the at least one antenna 102 to the LP-V or the LP-H based at least on the comparison.

As illustrated in FIG. 4A, the RFID reader 100 (e.g., IF3A RFID reader), the at least one processor 104, a switch-1 400, a switch-2 402, and a 90-degree coupler 404. In some embodiments, the RFID reader 100 may be configured to send the plurality of RF signals along with one or more commands to the at least one processor 104. Further, the at least one processor 104 may be configured to receive the plurality of RF signals and the one or more commands from the RFID reader 100. In some embodiments, the at least one processor 104 may be configured to control the switch-1 400 and switch-2 402 through one or more control lines and one or more control signals. Further, the one or more control lines may comprise at least one of a control-1 and control-2. In some embodiments, the switch-1 400 may be configured to determine whether the plurality of RF signals may pass directly to the switch-2 402 or through the 90-degree coupler 404. In some embodiments, the 90-degree coupler 404 may be configured to split the plurality of RF signals and introduce a 90-degree phase shift in the plurality of RF signals.

Further, the 90-degree coupler 404 may be configured to route the plurality of RF signals to the switch-2 402 in a specific phase configuration. In some embodiments, the switch-2 402 may be configured to determine a final path of the plurality of RF signals based at least on the one or more command signals. In some embodiments, the switch-2 402 may be configured to direct the plurality of RF signals to either the first feed point 206 or the second feed point 208 of the at least one antenna 102. In some embodiments, the first feed point 206 (LP-H) of the at least one antenna 102 may be configured to emit the plurality of RF signals with horizontal polarization. Further, the at least one processor 104 may cause the RFID reader 100 to switch the linear polarization of the at least one antenna 102 to the LP-H, when the switch-1 400 is set to "0" and the switch-2 402 is set to "0", as illustrated by the logic table 406 in FIG. 4B.

In some embodiments, the second feed point 208 (LP-V) of the at least one antenna 102 may be configured to emit the plurality of RF signals with vertical polarization. Further, the at least one processor 104 may cause the RFID reader 100 to switch the linear polarization of the at least one antenna 102 to the LP-V, when the switch-1 400 is set to "0" and the switch-2 402 is set to "1", as illustrated by the logic table 406. In some embodiments, the at least one antenna 102 may be configured to emit the plurality of RF signals with circular polarization. Further, the at least one processor 104 may cause the RFID reader 100 to switch from the linear polarization of the at least one antenna 102 to the circular polarization, when the switch-1 400 is set to "1" and the plurality of RF signals pass through the 90-degree coupler 404, as illustrated by the logic table 406.

In a first example, the RFID reader 100 may be configured to switch the polarization of the at least one antenna 102 from the linear polarization to the circular polarization. For example, the RFID reader 100 may be configured to measure the transmit power (i.e., 30 dBm) of the at least one antenna 102 of the RFID reader 100. Further, the RFID reader 100 may be configured to measure the antenna gain (i.e., 6 dBi) of the RFID reader 100. Further, the RFID reader 100 may be configured to measure the switch loss (i.e., 1 dB) of the RFID reader 100. Further, the RFID reader 100 may be configured to measure the RF cable loss (i.e., 2 dB) of the RFID reader 100. Further, the RFID reader 100 may be configured to calculate the EIRP of the RFID reader 100. Further, the EIRP of the RFID reader 100 may be calculated using following equation: *EIRP =* 30 + 6 - 3, where, 30 corresponds to transmit power, 6 corresponds to antenna gain, and -3 corresponds to a sum of antenna loss and the cable loss. Further, the EIRP calculated by the at least one processor 104 corresponds to 33. Further, the RFID reader 100 may be configured to compare the EIRP of the RFID reader 100 with the threshold value. Further, the threshold value may correspond to the maximum frequency limit of the EIRP for the RFID reader 100. For example, the maximum frequency limit of the EIRP for the RFID reader 100 is 36 dBm.

Further, the RFID reader 100 may be configured to switch the polarization of the at least one antenna 102 from the linear polarization to the circular polarization, when the EIRP determined is above the threshold value (i.e., >36 dBm). Further, the RFID reader 100 may be configured to switch the polarization of the at least one antenna 102 from the circular polarization to the linear polarization (i.e., LP-V or LP-H), when the EIRP determined is below the threshold value (i.e., 33 <36 dBm). The RFID reader 100 may be configured to measure the RSSI value of the at least one RFID tag 112 in the LP-V. The RFID reader 100 may be configured to measure the RSSI value of the at least one RFID tag 112 in the LP-H. Further, the RFID reader 100 may be configured to compare the RSSI value of the at least one RFID tag 112 in the LP-V with the RSSI value of the at least one RFID tag 112 in the LP-H. Further, the RFID reader 100 may be configured to set the polarization of the at least one antenna 102 to the LP-V or the LP-H, based at least on the comparison.

In a first example, the RFID reader 100 may be configured to switch the polarization of the at least one antenna 102 from the circular polarization to the linear polarization. For example, the RFID reader 100 may be configured to measure the transmit power (i.e., 33 dBm) of the at least one antenna 102 of the RFID reader 100. Further, the RFID reader 100 may be configured to measure the antenna gain (i.e., 9 dBi) of the RFID reader 100. Further, the RFID reader 100 may be configured to measure the switch loss (i.e., 1 dB) of the RFID reader 100. Further, the RFID reader 100 may be configured to measure the RF cable loss (i.e., 2 dB) of the RFID reader 100. Further, the RFID reader 100 may be configured to calculate the EIRP of the RFID reader 100. Further, the EIRP of the RFID reader 100 may be calculated using following equation: *EIRP =* 33 + 9 - 3, Where: 33 corresponds to transmit power, 9 corresponds to antenna gain, and -3 corresponds to a sum of antenna loss and the cable loss. Further, the EIRP calculated by the at least one processor 104 corresponds to 39. Further, the RFID reader 100 may be configured to compare the EIRP of the RFID reader 100 with the threshold value. Further, the threshold value may correspond to the maximum frequency limit of the EIRP for the RFID reader 100. For example, the maximum frequency limit of the EIRP for the RFID reader 100 is 36 dBm.

Further, the RFID reader 100 may be configured to switch the polarization of the at least one antenna 102 from the linear polarization to the circular polarization, when the EIRP determined is above the threshold value (i.e., 39 >36 dBm). Further, the RFID reader 100 may be configured to switch the polarization of the at least one antenna 102 from the circular polarization to the linear polarization (i.e., LP-V or LP-H), when the EIRP determined is below the threshold value (i.e., <36 dBm). Further, the RFID reader 100 may be configured to measure the RSSI value of the at least one RFID tag 112 in the LP-V. Further, the RFID reader 100 may be configured to measure the RSSI value of the at least one RFID tag 112 in the LP-H. Further, the RFID reader 100 may be configured to compare the RSSI value of the at least one RFID tag 112 in the LP-V with the RSSI value of the at least one RFID tag 112 in the LP-H. Further, the RFID reader 100 may be configured to set the polarization of the at least one antenna 102 to the LP-V or the LP-H, based at least on the comparison.

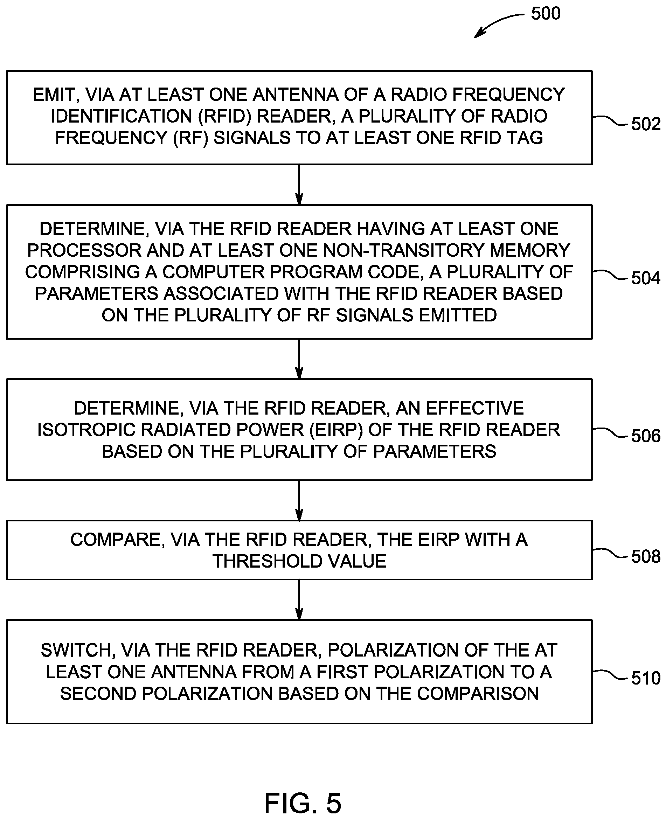

FIG. 5 illustrates a flowchart showing a method 500 for switching the polarization of the at least one antenna 102 of the RFID reader 100, in accordance with an example embodiment of the present disclosure.

At operation 502, the RFID reader 100 may be configured to emit the plurality of RF signals on the at least one RFID tag 112. In some embodiments, the at least one RFID tag 112 may be present within the FOV of the at least one antenna 102 of the RFID reader 100. In one example, the plurality RF signals are configured to travel through various mediums and interact with the at least one RFID tag 112. In some embodiments, the at least one antenna 102 may correspond to at least one of a linear polarized antenna and circular polarized antenna. In some embodiments, the linear polarized antenna may be configured to emit the plurality of RF signals in a single plane (e.g., the LP-H and the LP-V). In some embodiments, the circular polarized antenna may be configured to emit the plurality of RF signals in the rotating circular pattern for better interaction with the at least one RFID tag 112.

At operation 504, the RFID reader 100 may be configured to determine the plurality of parameters associated with the RFID reader 100, based on the plurality of RF signals emitted. In some embodiments, the plurality of parameters may comprise at least one of transmit power, antenna gain, switch loss, and RF cable loss associated with the RFID reader 100. In some embodiments, the transmit power of the RFID reader 100 may refer to an amount of power the at least one antenna 102 uses to emit the plurality of RF signals. Further, the transmit power may be directly proportional to range of the RFID reader 100 to read the at least one RFID tag 112. In some embodiments, the antenna gain may be configured to represent ability of the at least one antenna 102 of the RFID reader 100 to convert an input power into the plurality of RF signals in a specific direction. In some embodiments, the switch loss of the RFID reader 100 may refer to a loss of signal strength when the plurality of RF signals passes through switches within the RFID reader 100. Further, the switches may be configured to route the plurality of RF signals between different components of the RFID reader 100 or the at least one antenna 102. In some embodiments, the RF cable loss may be configured to refer reduction in signal strength as the plurality of RF signals travels through cables that may connect the RFID reader 100 to the at least one RFID antenna 102.

At operation 506, the RFID reader 100 may be configured to determine the EIRP of the RFID reader 100 based at least on the plurality of parameters determined. In some embodiments, the EIRP of the RFID reader 100 may be calculated using the plurality of parameters (i.e., the transmit power (Pt), the antenna gain (Ga), and a sum of the switch loss and cable loss (Lc)). In some embodiments, the EIRP of the RFID reader 100 may be calculated using following equation: *EIRP = Pt + Ga - Lc.*

At operation 508, the RFID reader 100 may be configured to compare the EIRP with the threshold value. In some embodiments, the threshold value may correspond to a maximum frequency limit of the EIRP for the RFID reader 100. Further, the maximum frequency limit of the EIRP for the RFID reader 100 is 36 dBm.

At operation 510, the RFID reader 100 may be configured to switch polarization of the at least one antenna 102 from the first polarization to the second polarization based on the comparison. In some embodiments, the first polarization may correspond to a linear polarization and the second polarization may correspond to a circular polarization. In one instance, the at least one processor 104 may be configured to switch the polarization of the at least one antenna 102 of the RFID reader 100 from the linear polarization to the circular polarization when the EIRP determined is above the threshold value. In another instance, the at least one processor 104 may be configured to switch the polarization of the at least one antenna 102 of the RFID reader 100 from the circular polarization to the linear polarization when the EIRP determined is below the threshold value.

The present disclosure streamlines the process of switching polarization of the at least one antenna 102 of the RFID reader 100. Embodiments of the present disclosure may determine polarization of the at least one antenna 102 of the RFID reader 100 using the plurality of parameters. Embodiments of the present disclosure may determine the EIRP of the RFID reader 100 based at least on the plurality of parameters. Embodiments of the present disclosure may improve efficiency of the at least one antenna 102 of the RFID reader 100.

Many modifications and other embodiments of the disclosure set forth herein will come to mind to one skilled in the art to which the present disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A radio frequency identification (RFID) reader comprising:
at least one antenna configured to emit a plurality of radio frequency (RF) signals to at least one RFID tag;
at least one processor and at least one non-transitory memory comprising a computer program code, the at least one non-transitory memory and the computer program code configured to, with the at least one processor, cause the RFID reader to:
determine a plurality of parameters associated with the RFID reader based on the plurality of RF signals emitted;
determine an effective isotropic radiated power (EIRP) of the RFID reader based on the plurality of parameters;
compare the EIRP with a threshold value; and
switch a polarization of the at least one antenna from a first polarization to a second polarization based on the comparison.

2. The RFID reader of claim 1, wherein the plurality of parameters are parameters associated with the RFID reader and comprise at least one of a transmit power, an antenna gain, a switch loss, and a RF cable loss.

3. The RFID reader of claim 1, wherein the first polarization corresponds to a linear polarization and the second polarization corresponds to a circular polarization.

4. The RFID reader of claim 3, wherein to switch the polarization from the linear polarization to the circular polarization occurs when the EIRP is above the threshold value.

5. The RFID reader of claim 3, wherein to switch the polarization from the circular polarization to the linear polarization occurs when the EIRP is below the threshold value.

6. The RFID reader of claim 3, wherein the linear polarization further comprises at least a linear polarization-vertical (LP-V) and a linear polarization-horizontal (LP-H).

7. The RFID reader of claim 6, wherein the at least one non-transitory memory and the computer program code are further configured to, with the at least one processor, cause the RFID reader to determine a received signal strength indicator (RSSI) value associated with signals received from the at least one RFID tag, in the LP-V and the LP-H.

8. The RFID reader of claim 7, wherein the at least one non-transitory memory and the computer program code are further configured to, with the at least one processor, cause the RFID reader to compare the RSSI value in the LP-V with the RSSI value in the LP-H.

9. The RFID reader of claim 8, wherein the at least one non-transitory memory and the computer program code are further configured to, with the at least one processor, cause the RFID reader to set the polarization of the at least one antenna to the LP-V or the LP-H based at least on the comparison.

10. A method comprising:
emitting, via at least one antenna of a radio frequency identification (RFID) reader, a plurality of radio frequency (RF) signals to at least one RFID tag;
determining, via the RFID reader having at least one processor and at least one non-transitory memory comprising a computer program code, a plurality of parameters associated with the RFID reader based on the plurality of RF signals emitted;
determining, via the RFID reader, an effective isotropic radiated power (EIRP) of the RFID reader based on the plurality of parameters;
comparing, via the RFID reader, the EIRP with a threshold value; and
switching, via the RFID reader, polarization of the at least one antenna from a first polarization to a second polarization based on the comparison.

11. The method of claim 10, wherein the plurality of parameters are parameters associated with the RFID reader and comprise at least one of a transmit power, an antenna gain, a switch loss, and a RF cable loss.

12. The method of claim 10, wherein the first polarization corresponds to a linear polarization and the second polarization corresponds to a circular polarization.

13. The method of claim 12, wherein the linear polarization further comprises at least a linear polarization-vertical (LP-V) and a linear polarization-horizontal (LP-H).

14. The method of claim 13, further comprising determining, via the RFID reader, a received signal strength indicator (RSSI) value associated with signals received from the at least one RFID tag, in the LP-V and the LP-H.

15. The method of claim 14, further comprising comparing, via the RFID reader, the RSSI value in the LP-V with the RSSI value in the LP-H.
